# EUROPÄISCHE PATENTANMELDUNG

(11) **EP 1 090 952 A1**
(43) Veröffentlichungstag der Anmeldung: **11.04.2001**
(21) Anmeldenummer: 00121801.5
(22) Anmeldetag: 05.10.2000
(51) Int. Cl.: C08K 5/00, C08L 75/04

(54) **Stabilisatorzusammensetzung**

(30) Priorität: 06.10.1999 DE 19948117
(71) Anmelder: BASF AKTIENGESELLSCHAFT, 67056 Ludwigshafen (DE)
(72) Erfinder: Appel, Manfred, 76829 Landau (DE); Trauth, Hubert, 67373 Dudenhofen (DE); Krockenberger, Jürgen, 70569 Stuttgart (DE); Aumüller, Alexander, 269204 Singapore (SG)
(74) Vertreter: Kinzebach, Werner, Dr.

(57) **Zusammenfassung**

Beschrieben wird eine Stabilisatorzusammensetzung, die einen 3-Arylacrylsäureester, eine polymere Verbindung mit einem Molekulargewicht von wenigstens 2000, die an einem polymeren Gerüst Seitengruppen mit sekundären Aminfunktionen trägt, worin alle Substituenten in α-Position zum Aminstickstoffatom von Wasserstoff verschieden sind, ein Chromanderivat und ein organisches Phosphit und/oder Phosphonit enthält. Die Stabilisatorzusammensetzung ist insbesondere zur Stabilisierung von thermoplastischen Polyurethan gegen Licht, Sauerstoff und Wärme geeignet.

## Beschreibung

Die vorliegende Erfindung betrifft eine Stabilisatorzusammensetzung sowie deren Verwendung zur Stabilisierung von unbelebtem organischen Material gegen die Einwirkung von Licht, Sauerstoff und Wärme.

Die mechanischen, chemischen und/oder ästhetischen Eigenschaften von unbelebtem organischen Material, insbesondere Kunststoffen und Lacken, werden bekanntermaßen durch die Einwirkung von Licht, Sauerstoff und Wärme verschlechtert. Diese Verschlechterung zeigt sich üblicherweise als Vergilbung, Verfärbung, Rissbildung oder Versprödung des Materials. Mit Stabilisatoren oder Stabilisatorzusammensetzungen soll ein zufriedenstellender Schutz gegen die Beeinträchtigung von organischem Material durch Licht, Sauerstoff und Wärme erzielt werden.

Sterisch gehinderte Amine (Hindered Amine Light Stabilizers; HALS) sind bekannte Stabilisatoren gegen photolytische und thermische Zersetzung von Kunststoffen. Besonders geeignete Verbindungen dieser Art sind oligomere HALS. So offenbart die ***DE-A-4239437*** bestimmte Maleinsäureamid-α-Olefin-Copolymerisate mit Tetramethylpiperidinyl-Seitengruppen, die wirksame Stabilisatoren darstellen.

Bei den oligomeren HALS handelt es sich um Feststoffe. Es hat sich gezeigt, dass das Einarbeiten und die homogene Verteilung dieser Substanzen in z. B. Kunststoffformmassen bisweilen schwierig sind.

Die ***DE-A-4440288*** offenbart die Verwendung von bestimmten 3-Arylacrylsäureestern als Lichtschutzmittel und Stabilisatoren für unbelebtes organisches Material. Die 3-Arylacrylsäureester können in Kombination mit sterisch gehinderten Aminen verwendet werden.

Die ***DE-A-4405670*** betrifft ein Stabilisatorgemisch aus Chromanderivaten, organischen Phosphiten oder Phosphoniten und Aminen zur Stabilisierung von organischem Material.

Der vorliegenden Erfindung liegt die Aufgabe zugrunde, eine neue Stabilisatorzusammensetzung auf der Basis oligomerer HALS anzugeben, die in einer Form vorliegt, die leicht in das zu stabilisierende Material eingearbeitet und homogen verteilt werden kann und eine hohe Schutzwirkung gegen die Einwirkung von Licht, Sauerstoff und Wärme bietet. Die Stabilisatorzusammensetzung soll besonders wirksam zur Stabilisierung von Polyurethanen sein.

Erfindungsgemäß wird diese Aufgabe durch eine Stabilisatorzusammensetzung gelöst, die umfasst
A) wenigstens einen 3-Arylacrylsäureester der allgemeinem Formel I 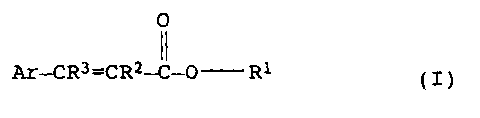 in der
   - Ar: für einen Arylrest steht, welcher 1, 2 oder 3 Substituenten, die unter C₁₋₄-Alkyl, C₁₋₄-Alkoxy, Hydroxy, Phenoxy, Amino, Mono- oder Di(C₁₋₄alkyl)amino, Halogen oder Nitro ausgewählt sind, oder eine Methylendioxygruppe tragen kann,
   - R¹: für C₁- bis C₂₀-Alkyl oder C₂- bis C₂₀-Alkenyl steht,
   - R² und R³: für Wasserstoff oder C₁- bis C₄-Alkyl stehen,
B) eine polymere Verbindung mit einem Molekulargewicht von wenigstens 2000, die an einem polymeren Gerüst Seitengruppen mit sekundären Aminfunktionen trägt, worin alle Substituenten in α-Position zum Amin-Stickstoff von Wasserstoff verschieden sind,
C) wenigstens ein Chromanderivat der Formel II, 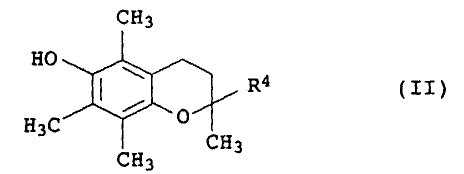 in der R⁴ für eine Gruppe der Formel 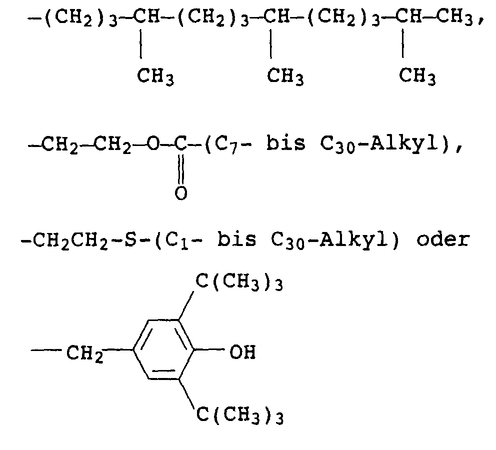 steht, und
D) wenigstens ein organisches Phosphit und/oder Phosphonit.

Die erfindungsgemäße Stabilisatorzusammensetzung liegt bei Raumtemperatur im Allgemeinen als viskose Flüssigkeit vor und kann daher leicht in das zu stabilisierende Material eingearbeitet und homogen verteilt werden. Vorzugsweise handelt es sich bei der erfindungsgemäßen Stabilisatorzusammensetzung um eine viskose Flüssigkeit, die eine Viskosität im Bereich von 2600 bis 3000 mPas, insbesondere 2700 bis 2900 mPas, gemessen bei 20 °C und 30 s⁻¹ mit einer Haake Rheowin RS 150 Vorrichtung, aufweist.

Es wurde ferner gefunden, dass die Schutzwirkung der erfindungsgemäßen Stabilisatorzusammensetzung gegen die Einwirkung von Licht, Sauerstoff und Wärme höher ist, als nach den Beiträgen der Komponenten der Stabilisatorzusammensetzung zu erwarten ist. Die ausgeprägte Schutzwirkung der erfindungsgemäßen Stabilisatorzusammensetzung beruht demnach auf einem synergistischen Effekt der Komponenten.

Die erfindungsgemäße Stabilisatorzusammensetzung umfasst als Komponente A) einen 3-Arylacrylsäureester der allgemeinen Formel I.

In der Formel I steht Ar z. B. für
Phenyl,
o-, m- oder p-Tolyl,
o-, m- oder p-Ethylphenyl,
o-, m- oder p-Propylphenyl,
m- oder p-Cumyl,
o-, m- oder p-Butylphenyl,
m- oder p-iso-Butylphenyl,
m- oder p-sec-Butylphenyl,
m- oder p-tert-Butylphenyl,
2,3-, 2,4-, 2,5-, 2,6-, 3,4- oder 3,5-Dimethylphenyl,
Mesityl,
o-, m- oder p-Methoxyphenyl,
o-, m- oder p-Ethoxyphenyl,
o-, m- oder p-Propoxyphenyl,
m- oder p-iso-Propoxyphenyl,
o-, m- oder p-Butoxyphenyl,
m- oder p-iso-Butoxyphenyl,
m- oder p-sec-Butoxyphenyl,
m- oder p-tert-Butoxyphenyl,
2,3-, 2,4-, 2,5-, 2,6-, 3,4- oder 3,5-Dimethoxyphenyl,
o-, m- oder p-Hydroxyphenyl,
2,3-, 2,4-, 2,5-, 2,6-, 3,4- oder 3,5-Dihydroxyphenyl,
3-Hydroxy-4-methoxyphenyl,
m- oder p-Phenoxyphenyl,
o-, m- oder p-Aminophenyl,
o-, m- oder p-(N-Methylamino)phenyl,
o-, m- oder p-(N,N-Dimethylamino)phenyl,
o-, m- oder p-Fluorphenyl,
o-, m- oder p-Chlorphenyl,
2,4-Dichlorphenyl,
o-, m- oder p-Bromphenyl,
o-, m- oder p-Nitrophenyl,
2,3- oder 3, 4-Methylendioxyphenyl,
2-, 3- oder 4-Biphenylyl und
α- oder β-Naphthyl.

Besonders bevorzugt sind C₁-C₄-Alkoxyphenylreste, insbesondere solche, in denen der Alkoxyrest in p-Position am Phenylkern steht.

R¹ steht für eine geradkettige oder verzweigte C₁-C₂₀-Alkyl- oder C₂-C₂₀-Alkenylgruppe, z. B. Methyl, Ethyl, n-Propyl, iso-Propyl, n-Butyl, iso-Butyl, sec-Butyl, tert-Butyl, n-Pentyl, iso-Pentyl, sec-Pentyl, tert-Pentyl, neo-Pentyl, n-Hexyl, n-Heptyl, n-Octyl, 2-Ethylhexyl, n-Nonyl, iso-Nonyl, n-Decyl, n-Undecyl, n-Dodecyl, n-Tridecyl, iso-Tridecyl, n-Tetradecyl, n-Hexadecyl, n-Octadecyl, n-Eicosyl, Vinyl, Allyl, Methallyl, Oleyl, Linolyl und Linolenyl. Hiervon sind geradkettige oder verzweigte C₅- bis C₁₆-Alkylgruppen, insbesondere geradkettige oder verzweigte C₈- bis C₁₂-Alkylgruppen, bevorzugt. Von besonderem Interesse sind geradkettige oder verzweigte C₈-Alkylgruppen.

Als 3-Arylacrylsäureester der allgemeinen Formel I ist 2-Ethylhexyl-p-methoxycinnamat besonders bevorzugt.

Die erfindungsgemäβe Stabilisatorzusammensetzung enthält als Komponente B) eine polymere Verbindung mit einem Molekulargewicht von wenigstens 2000, insbesondere 2300 bis 50000, die an einem polymeren Gerüst Seitengruppen mit sekundären Aminfunktionen trägt, worin alle Substituenten in α-Position zum Amin-Stickstoffatom von Wasserstoff verschieden sind und z. B. C₁-C₄-Alkylreste, insbesondere Methylgruppen sind. Die als Komponente B) geeignete Verbindung ist demzufolge aus aufeinanderfolgenden Wiederholungseinheiten aufgebaut, wobei jede Wiederholungseinheit einen Polymergerüstanteil und wenigstens eine Seitengruppe mit wenigstens einer sekundären Aminfunktion aufweist, worin alle Substituenten in α-Position zum Amin-Stickstoffatom von Wasserstoff verschieden sind. Die Wiederholungseinheit kann weitere Seitengruppen aufweisen, die z. B. die Kompatibilität mit dem zu stabilisierenden organischen Material verbessern. In der Regel umfasst die Komponente B) 5 bis 100, vorzugsweise 6 bis 60, Wiederholungseinheiten.

Bei der Komponenten B) handelt es sich mit Vorteil um Maleinsäureanhydrid-(Co)polymerisate, die z. B. aus 0 bis 90 Mol-% C₂-C₃₀-α-Olefineinheiten und 10 bis 100 Mol-% MaleinsäureanhydridEinheiten bestehen, wobei die Maleinsäureanhydrid-Einheiten ganz oder teilweise, z. B. zu mehr als 92 Mol-%, mit 4-Amino-2,2,6,6-tetramethylpiperidin imidiert sind.

Besonders bevorzugt handelt es sich bei der Komponente B) um ein Maleinsäure-α-Olefin-Copolymerisat, das aus Struktureinheiten der Formel III besteht, 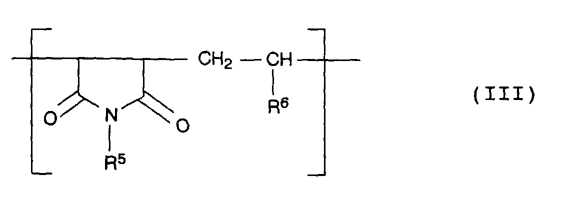
in der wenigstens 92 Mol.-% der Reste R⁵ für einen Tetramethylpiperidinyl-Rest der Formel IV 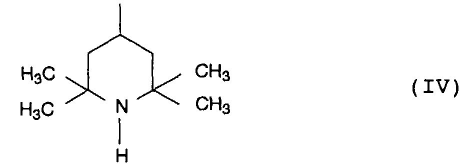
und bis zu 8 Mol.-% der Reste R⁵ für Wasserstoff, C₁-C₂₂-Alkyl oder C₅-C₈-Cycloalkyl stehen und
R⁶ für C₁₄-C₂₈-Alkyl, vorzugsweise C₁₆-C₂₄-Alkyl, insbesondere C₁₈-C₂₂-Alkyl, steht.

Der Rest R⁶ stellt vorzugsweise ein Gemisch aus C₁₄-C₂₈-Alkylgruppen, vorzugsweise C₁₆-C₂₄-Alkylgruppen, insbesondere C₁₈-C₂₂-Alkylgruppen dar. Die Auftragung des molaren Anteils der Alkylgruppen einer gegebenen Kohlenstoffanzahl an der Gesamtzahl aller Reste R⁶ der Copolymerisatmoleküle einer Probe gegen die Kohlenstoffanzahl enthält vorzugsweise wenigstens zwei Maxima, die jeweils mindestens 30, vorzugsweise jeweils mindestens 40 Mol-% ausmachen und deren zugeordnete Kohlenstoffzahlen sich um ein oder vorzugsweise zwei C-Atome unterscheiden. Es handelt sich insbesondere um Mischungen von Octadecyl, Eicosyl und Docosyl, wovon zwei dieser Gruppen, die sich um zwei Kohlenstoffatome unterscheiden, mehr als 40 Mol-% und die dritte Gruppe 3 bis 19 Mol-% des Gemisches der Reste R ausmachen.

Die Copolymerisate der Formel III können nach einem Verfahren hergestellt werden, bei dem man alternierende Maleinsäureanhydrid-α-Olefin-Copolymerisate mit 4-Amino-2,2,6,6-tetramethylpiperidin und gewünschtenfalls bis zu 8 Mol-%, bezogen auf das Copolymerisat, Ammoniak, C₁-C₂₂-Alkylamin oder C₅-C₈-Cycloalkylamin in einem organischen Lösungsmittel bei 100 bis 220 °C umsetzt. Als organische Lösungsmittel eignen sich vor allem aromatische Kohlenwasserstoffe, wie Toluol, Xylole oder Mesitylen und Halogen- oder Nitrokohlenwasserstoffe, wie Chlorbenzol, Dichlorbenzole oder Nitrobenzole. Das bei der Umsetzung gebildete Wasser kann zweckmäßigerweise azeotrop abdestilliert werden. Die als Ausgangsmaterial eingesetzten Maleinsäureanhydrid-α-Olefin-Copolymerisate sind durch Copolymerisation von Maleinsäureanhydrid mit α-Olefinen oder α-Olefin-Gemischen erhältlich, beispielsweise in Anlehnung an Houben-Weyl, Methoden der Organischen Chemie, Band E20/2, S. 1237-1248 (1987). Bezüglich bevorzugter Verbindungen, die als Komponente B) geeignet sind, wird vollinhaltlich auf die DE-A-4239437 Bezug genommen.

Die erfindungsgemäße Stabilisatorzusammensetzung enthält als Komponente C) wenigstens einen Chromanderivat der Formel II. Hierzu eignen sich vor allem 2,5,7,8-Tetramethyl-2-(2'-stearoyloxyethyl)chroman (R⁴= -CH₂CH₂-O-CO-C₁₇H₃₅) und insbesondere α-Tocopherole, vorzugsweise DL-α-Tocopherol (R⁴= -(CH₂)₃-CH(CH₃)-(CH₂)₃-CH(CH₃)-(CH₂)₃-C(CH₃)₂).

Die erfindungsgemäße Stabilisatorzusammensetzung enthält als Komponente D) wenigstens ein organisches Phosphit und/oder Phosphonit.

Hierzu sind insbesondere organische Phosphite der allgemeinen Formel V 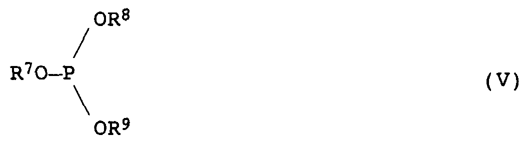
in der die Reste R⁷ bis R⁹ jeweils C₂- bis C₁₂-Alkyl, vorzugsweise C₆- bis C₁₁-Alkyl, insbesondere C₈- bis C₁₀-Alkyl, oder C₆- bis C₁₈-Aryl, vorzugsweise Phenyl, welches durch C₁- bis C₁₈-Alkylgruppen, vorzugsweise ein bis drei C₄- bis C₁₂-Alkylgruppen, substituiert sein kann, bezeichnen,
oder ein organisches Phosphonit der Formel VI 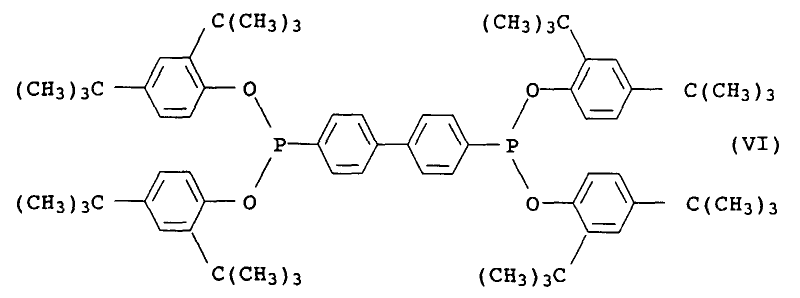
oder Mischungen aus den Phosphiten V und dem Phosphonit VI geeignet.

Als Beispiele für Phosphite der Formel V sind zu nennen:
- Trisalkylphosphite mit bevorzugt langkettigen linearen oder verzweigten Alkylgruppen wie Octyl-, Nonyl-, Isononyl-, Decyl- oder Isodecylgruppen;
- Triarylphosphite mit unsubstituierten oder ein- bis dreifach alkylsubstituierten Arylgruppen wie Phenyl-, Nonylphenyl- oder 2,4-Di-tert-butylphenylgruppen;
- gemischte Arylalkylphosphite, wie Diisodecylphenylphosphit oder Diphenylpentaerythritdiphosphit.

Das Phosphonit der Formel VI ist im Handel unter dem Namen Irgafos®P-EPQ der Fa. Ciba-Geigy erhältlich.

Wahlweise enthält die erfindungsgemäße Stabilisatorzusammensetzung zusätzlich wenigstens ein primäres, sekundäres oder tertiäres Monoamin, z. B. der Formel N(R¹⁰)(R¹¹)(R¹²), worin R¹⁰, R¹¹ und R¹² jeweils unabhängig für Wasserstoff oder C₁- bis C₁₈-Alkyl, welches durch bis zu 5 nicht benachbarte Sauerstoffatome oder Gruppen der Formel -NR¹³- unterbrochen und/oder durch 1, 2 oder 3 Hydroxygruppen substituiert sein kann, wobei R¹³ für Wasserstoff oder C₁-C₄-Alkyl steht, oder für Phenyl, welches durch 1, 2 oder 3 C₄-C₁₈-Alkylgruppen substituiert sein kann, stehen, mit der Maßgabe, dass R¹⁰, R¹¹ und R¹² nicht gleichzeitig für Wasserstoff stehen.

Als Beispiele für derartige Amine seien genannt: Butylamin, Dibutylamin, Tributylamin, Tripropylamin, Triisopropylamin, Octylamin, Diisobutylamin oder Stearylamin.

Bevorzugt werden weiterhin Amine, die Hydroxylgruppen enthaltende Reste besitzen, z. B. Ethanolamin, Diethanolamin, Triethanolamin, Propanolamin, Dipropanolamin, Tripropanolamin, Isopropanolamin, Diisopropanolamin und insbesondere Triisopropanolamin.

Die erfindungsgemäße Stabilisatorzusammensetzung enthält im Allgemeinen
30 bis 40 Gewichtsteile, vorzugsweise 32 bis 35 Gewichtsteile A),
30 bis 40 Gewichtsteile, vorzugsweise 32 bis 35 Gewichtsteile B),
2 bis 4 Gewichtsteile, vorzugsweise 2,5 bis 3,5 Gewichtsteile C) und
25 bis 35 Gewichtsteile, vorzugsweise 28 bis 32 Gewichtsteile D).

Wird ein primäres, sekundäres oder tertiäres Amin mitverwendet, wird dies vorzugsweise in einer Menge von 0,02 bis 0,5, vorzugsweise 0,04 bis 0,2 Gewichtsteilen mitverwendet.

Die erfindungsgemäße Stabilisatorzusammensetzung wird dem zu stabilisierenden organischen Material in der Regel in einer Konzentration von 0,05 bis 5 Gew.-%, vorzugsweise von 0,01 bis 2 Gew.-%, insbesondere von 0,05 bis 1 Gew.-%, bezogen auf das organische Material vor, während oder nach seiner Herstellung zugesetzt.

Unter unbelebtem organischen Material sind beispielsweise kosmetische Präparate, wie Salben und Lotionen, Arzneimittelformulierungen, wie Pillen und Zäpfchen, photographische Aufzeichnungsmaterialien, insbesondere photographische Emulsionen, Vorprodukte für Kunststoffe und Anstrichmittel, insbesondere jedoch Anstrichmittel und Kunststoffe selbst, zu verstehen.

Als Kunststoffe, die durch das erfindungsgemäße Stabilisatorgemisch stabilisiert werden können, seien beispielsweise genannt:

Polymere von Mono- und Diolefinen, wie z. B. Polyethylen niedriger oder hoher Dichte, Polypropylen, lineares Polybuten-1, Polyisopren, Polybutadien sowie Copolymerisate von Mono- oder Diolefinen oder Mischungen der genannten Polymeren;

Polystyrol sowie Copolymere von Styrol oder α-Methylstyrol mit Dienen und/oder Acrylderivaten, wie z. B. Styrol-Butadien, Styrol-Acrylnitril (SAN), Styrol-Ethylmethacrylat, Styrol-Butadien-Ethylacrylat, Styrol-Acrylnitril-Methacrylat, Acrylnitril-Butadien-Styrol (ABS) oder Methylmethacrylat-Butadien-Styrol (MBS); halogenhaltige Polymere, wie z. B. Polyvinylchlorid, Polyvinylfluorid, Polyvinylidenfluorid sowie deren Copolymere;

Polymere, die sich von α,β-ungesättigten Säuren und deren Derivaten ableiten, wie Polyacrylate, Polymethacrylate, Polyacrylamide und Polyacrylnitrile;

Polymere, die sich von ungesättigten Alkoholen und Aminen bzw. von deren Acrylderivaten oder Acetalen ableiten, z. B. Polyvinylalkohol und Polyvinylacetat;

Polyurethane, Polyamide, Polyharnstoffe, Polyphenylenether, Polyester, Polycarbonate, Polysulfone, Polyethersulfone und Polyetherketone.

Zu den Anstrichmitteln, die mit der erfindungsgemäßen Stabilisatorzusammensetzung stabilisiert werden können, zählen unter anderem Lacke, wie Alkydharzlacke, Dispersionslacke, Epoxydharzlacke, Polyurethanlacke, Acrylharzlacke, Cellulosenitratlacke, oder Lasuren, wie Holzschutzlasuren.

Die erfindungsgemäße Stabilisatorzusammensetzung ist besonders geeignet zur Stabilisierung von Polyurethanen, insbesondere thermoplastischen Polyurethanen. Dabei handelt es sich um überwiegend lineare Polyurethane, die, ausgehend von Diisocyanaten, wie 4,4'-Diisocyanato-diphenylmethan, und langkettigen Diolen, wie Polytetrahydrofuran oder Polyesterpolyolen, erhalten werden. Man geht in der Regel von entsprechenden Präpolymeren aus und setzt kurzkettige Diole oder Diamine als Kettenverlängerer ein; die erhaltenen Produkte sind segmentiert aufgebaut, wobei die Weichsegmente z. B. Molmassen von 1000 bis 3000 aufweisen und durch die Hartsegmente physikalisch vernetzt sind.

Die erfindungsgemäße Stabilisatorzusammensetzung kann auch in Form eines Masterbatches, der diese beispielsweise in einer Konzentration von 2,5 bis 25 Gew.-% enthält, hergestellt und den zu stabilisierenden Materialien zugesetzt werden.

Die Erfindung wird durch die folgenden Beispiele näher veranschaulicht.

### Beispiel 1:

Es wurde ein Gemisch hergestellt aus
- 100: Gewichtsteilen p-Methoxyzimtsäure-2-ethylhexylester,
- 100: Gewichtsteilen eines alternierenden N-(2,2,6,6-tetramethyl-4-piperidinyl)maleinsäureimid-C₂₀-C₂₄-α-Olefin-Copolymerisats mit einem mittleren Molekulargewicht von etwa 2500,
- 9: Gewichtsteilen DL-α-Tocopherol,
- 90,5: Gewichtsteilen Trisnonylphenylphosphit
- 0,5: Gewichtsteilen Triisopopanolamin.

Es wurde eine viskose Flüssigkeit mit einer Viskosität von 2876 mPas bei 20 °C und 30 s⁻¹ erhalten.

### Beispiel 2 (Vergleichsbeispiel):

Es wurde ein Gemisch hergestellt aus
- 100: Gewichtsteilen p-Methoxyzimtsäure-2-ethylhexylester,
- 100: Gewichtsteilen eines oligomeren HALS der nachstehenden Formel,
- 9: Gewichtsteilen DL-α-Tocopherol,
- 90,5: Gewichtsteilen Trisnonylphenylphosphit
- 0,5: Gewichtsteilen Triisopopanolamin.

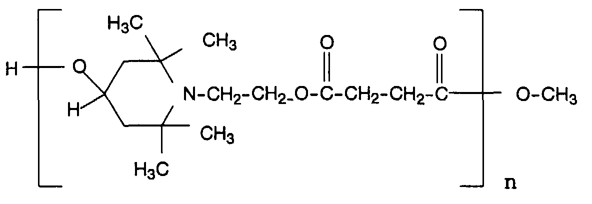

Das Gemisch zeigt ein gelartiges Verhalten. Es wurde keine fließfähige Flüssigkeit erhalten. Das gelartige Gemisch ist nicht geeignet, mit einem Extruder homogen in eine Polymerschmelze eingearbeitet zu werden.

### Beispiel 3:

### Prüfung der Stabilisatorwirkung

Thermoplastisches Polyurethan (Desmopan® Bayer) wurde aufgeschmolzen und mittels einer Spritzgussmaschine zu Prüfkörpern von 60 x 45 x 2 mm geformt.

In eine Probe wurden 0,6 Gew.-% der Stabilisatorzusammensetzung nach Beispiel 1 eingearbeitet. Als Vergleich diente eine handelsübliche Stabilisatorzusammensetzung in gleicher Menge, bestehend aus:
- 0,3: Gew.-% Tinuvin® P (2-(2-hydroxy-5-methylphenyl)-2H-benzotriazol),
- 0,3: Gew.-% eines oligomeren HALS der in Beispiel 2 gezeigten Formel,
- 0,2: Gew.-% Irganox® 1010 (sterisch gehindertes Phenol).

Zur Kontrolle wurde eine Probe ohne Stabilisator verwendet.

Die Prüfkörper wurden gemäß Xenotest 1200 (DIN 53 387) bewittert und danach der Yellowness-Index bestimmt. Die Ergebnisse sind in der nachstehenden Tabelle angegeben.

| | 0 Tage | 7 Tage | 14 Tage |
|---|---|---|---|
| unstabilisiert | 13 | 49 | 58 |
| Vergleich | 12 | 29 | 35 |
| Beispiel 1 | 11 | 22 | 31 |

Die mit dem erfindungsgemäßen Stabilisatorzusammensetzung stabilisierte Probe zeigt nach 7 bzw. 14 Tagen Bewitterung im Xenotest eine deutlich geringere Gelbfärbung als die unstabilisierte und die mit der Vergleichszusammensetzung stabilisierte Probe.

## Patentansprüche

1. Stabilisatorzusammensetzung, umfassend
A) wenigstens einen 3-Arylacrylsäureester der allgemeinem Formel I 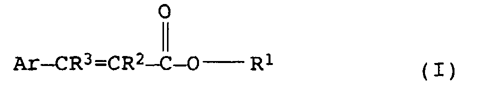 in der
Ar für einen Arylrest steht, welcher zusätzlich 1, 2 oder 3 Substituenten, die unter C₁₋₄-Alkyl, C₁₋₄-Alkoxy, Hydroxy, Phenoxy, Amino, Mono- oder Di(C₁₋₄alkyl)amino, Halogen oder Nitro ausgewählt sind, oder eine Methylendioxygruppe tragen kann.
R¹ für C₁- bis C₂₀-Alkyl oder C₂- bis C₂₀-Alkenyl steht,
R² und R³ für Wasserstoff oder C₁- bis C₄-Alkyl stehen,
B) eine polymere Verbindung mit einem Molekulargewicht von wenigstens 2000, die an einem polymeren Gerüst Seitengruppen mit sekundären Aminfunktionen trägt, worin alle Substituenten in α-Position zum Amin-Stickstoffatom von Wasserstoff verschieden sind,
C) wenigstens ein Chromanderivat der Formel II, 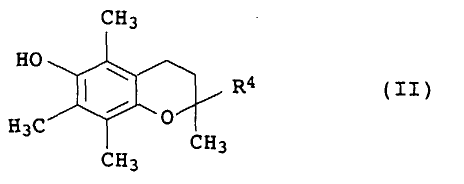 in der R⁴ für eine Gruppe der Formel 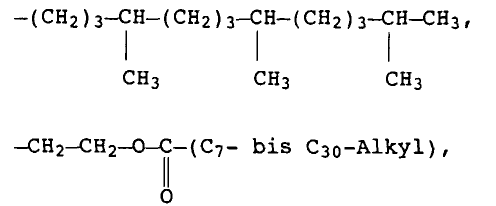 -CH₂CH₂-S-(C₁- bis C₃₀-Alkyl) oder 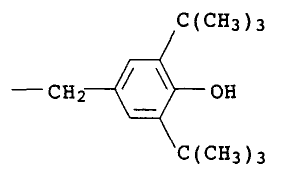 steht, und
D) wenigstens ein organisches Phosphit und/oder Phosphonit.

2. Stabilisatorzusammensetzung nach Anspruch 1, wobei Ar für einen C₁-C₄-Alkoxyphenylrest steht.

3. Stabilisatorzusammensetzung nach Anspruch 1 oder 2, wobei R¹ für C₅-C₁₆-Alkyl steht.

4. Stabilisatorzusammensetzung nach einem der vorhergehenden Ansprüche, wobei es sich bei der polymeren Verbindung B) um ein Maleinsäure-α-Olefin-Copolymerisat handelt, das aus Struktureinheiten der Formel III besteht, 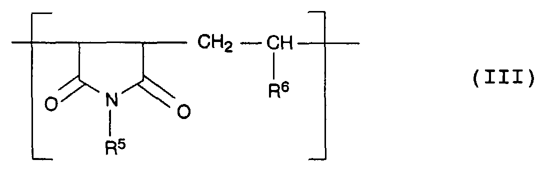 in der wenigstens 92 Mol.-% der Reste R⁵ für einen Tetramethylpiperidinyl-Rest der Formel IV 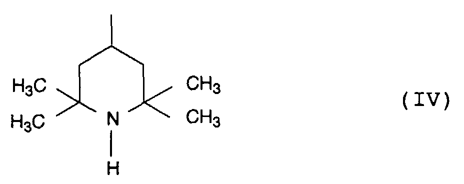 stehen und bis zu 8 Mol.-% der Reste R⁵ für Wasserstoff, C₁-C₂₂-Alkyl oder C₅-C₈-Cycloalkyl stehen und R⁶ für C₁₄-C₂₈-Alkyl steht.

5. Stabilisatorzusammensetzung nach einem der vorhergehenden Ansprüche, zusätzlich umfassend wenigstens ein primäres, sekundäres oder tertiäres Amin.

6. Stabilisatorzusammensetzung nach einem der vorhergehenden Ansprüche, mit einer Viskosität bei 20 °C und 30 s⁻¹ im Bereich von 2600 bis 3000 mPas.

7. Verwendung der Stabilisatorzusammensetzung nach einem der vorhergehenden Ansprüche zur Stabilisierung von unbelebtem organischen Material gegen die Einwirkung von Licht, Sauerstoff und Wärme.

8. Verwendung nach Anspruch 7 zur Stabilisierung von Kunststoffen.

9. Verwendung nach Anspruch 8 zur Stabilisierung von Polyurethanen, insbesondere thermoplastischen Polyurethanen.

10. Thermoplastische Formmasse, umfassend wenigstens ein thermoplastisches Polyurethan und eine Stabilisatorzusammensetzung nach einem der Ansprüche 1 bis 6.
